# EUROPÄISCHE PATENTANMELDUNG

(11) **EP 0 559 081 A1**
(43) Veröffentlichungstag der Anmeldung: **08.09.1993**
(21) Anmeldenummer: 93102969.8
(22) Anmeldetag: 25.02.1993
(51) Int. Cl.: G02B 5/30

(54) **Optische Elemente auf der Basis flüssigkristalliner Substanzen und ein Verfahren zu ihrer Herstellung**

(30) Priorität: 27.02.1992 DE 4206089
(71) Anmelder: Consortium für elektrochemische Industrie GmbH, D-81379 München (DE)
(72) Erfinder: Miller, Alfred, Dr., W-8033 Planegg (DE); Kreuzer, Franz-Heinrich, Dr., W-8033 Planegg (DE); Leigeber, Horst, W-8024 Oberhaching (DE)

(57) **Zusammenfassung**

Die Erfindung betrifft optische Elemente auf der Basis flüssigkristalliner Substanzen und ein Verfahren zu ihrer Herstellung. Die optischen Elemente auf der Basis flüssigkristalliner Substanzen sind dadurch gekennzeichnet, daß sie in einer definierten Einfallsrichtung keine Doppelbrechung zeigen, wobei optische Elemente, bei denen senkrecht zur Oberfläche keine Doppelbrechung auftritt, ausgenommen sind. Das Verfahren zur Herstellung der optischen Elemente ist dadurch gekennzeichnet, daß eine flüssigkristalline Substanz mit unpolarisiertem Licht geeigneter Wellenlänge unter einem definierten Winkel derart bestrahlt wird, daß der Direktor dieser Substanz nach der Bestrahlung parallel zur Richtung des Bestrahlungslichtes beim Durchgang durch diese Substanz ausgerichtet ist.

## Beschreibung

Die Erfindung betrifft optische Elemente auf der Basis flüssigkristalliner Substanzen und ein verfahren zu ihrer Herstellung.

Zwischen der festen kristallinen Phase und der fluiden Schmelze treten bei bestimmten Substanzen Zwischenphasen auf, die in struktureller und dynamischer Hinsicht Eigenschaften sowohl des geordneten kristallinen Zustands als auch des ungeordneten Schmelzzustandes in sich vereinigen. So sind diese Phasen zwar fluide, weisen aber z. B. optische Eigenschaften auf, die charakteristisch für die Mehrzahl kristalliner, aber auch teilkristalliner Stoffe sind: sie sind z.B. doppelbrechend oder besitzen eine dielektrische Anisotropie. Man spricht dabei von Zwischenphasen (Mesophasen) oder auch flüssigkristallinen Phasen. Diese Phasen sind über eine Temperaturvariation zu erhalten - in diesem Fall spricht man von thermotropen Flüssigkristallen - oder auch in Lösung über Konzentrationsvariationen. Im folgenden sollen nur thermotrope Flüssigkristalle betrachtet werden.

Zur Charakterisierung der Existenzbereiche dieser Zwischenphasen gibt man im allgemeinen die z. B. kalorimetrisch oder mittels polarisationsmikroskop bestimmten Übergangstemperaturen vom kristallinen Zustand in den flüssig-kristallinen Zustand (Glasübergangstemperatur) sowie vom flüssig-kristallinen Zustand in den der isotropen Schmelze (Klärpunkt) an (Vergl. G. Allen & J. C. Bevington Eds., Comprehensive Polymer Science, Vol. 5, S 701-732, Pergamon Press 1989). Beim Vorliegen unterschiedlicher flüssigkristalliner Zustände wird der Satz der entsprechenden Übergangstemperaturen angegeben.

Die Struktur der flüssigkristallinen Phasen ist durch einen unterschiedlichen Fern- und Nahordnungsgrad der Moleküle gekennzeichnet. Man unterscheidet dabei nematische Phasen, smektische Phasen und cholesterische Phasen. Cholesterische Phasen werden auch als chiral-nematische Phasen oder twisted -nematische Phasen bezeichnet.

In der nematischen Phase sind die Molekülzentren ungeordnet verteilt, während die Längsachsen der Moleküle parallel zueinander orientiert sind. Dies ist abweichend zum Zustand in der fluiden Schmelze, wo die Moleküllängsachsen statistisch angeordnet sind.

Bei den smektischen Phasen tritt in Ergänzung zu der beschriebenen Orientierungsordnung der nematischen Phase eine regelmäßige Anordnung der Molekülschwerpunkte im Raum hinzu. Diese regelmäßige Anordnung kann entlang einer, aber auch entlang zweier oder sogar dreier voneinander unabhängiger räumlicher Achsen vorhanden sein. Dennoch sind diese Phasen fluide. (Vgl. Ullmanns Encyclopädie der Technischen Chemie, Aufl. 4, Bd. 11, 657-671, Verlag Chemie 1976; H.F. Mark et al., Encyclopedia of Polymer Science and Engineering, 2nd Ed. Vol. 9, 1-61, J. Wiley & Sons 1987).

Bei der cholesterischen Phase sind Schichten von nematisch angeordneten Molekülen so übereinander angeordnet, daß sich eine kontinuierliche helikale Variation der Orientierungsrichtung der Moleküllängsachsen ergibt. Die Moleküle bilden also eine Helixstruktur mit der Periode p. Die cholesterische Phase hat somit eine helikale Struktur. Sie besitzt unter den flüssigkristallinen Phasen besondere Eigenschaften. (siehe z. B. Bergmann-Schaefer, Experimentalpriysik, Band III: Optik, 7. Auflage (1987), S. 560 - 567 oder de Vries, Acta crystallogr., (1951) 4, 219-226).

So ist bekannt, daß die cholesterische Phase von flüssigkristallinen Substanzen in einer makroskopischen Orientierung, bei der die Helixachsen zueinander parallel sowie senkrecht zur Oberfläche angeordnet sind, Licht, welches parallel zur Helixachse einfällt (Einfallswinkel 0°), in einem Wellenlängenbereich λref reflektiert, der durch die Periode p, auch pitch genannt, die Brechungsindices und die Doppelbrechung des helikalen Materials festgelegt wird (de Vries, H.I., (1951), Acta crystallogr., 4, 219; Meier, G. in: Physical Properties of Liquid Crystals, ed.: Meier, Sackmann, Grabmeier, Springer-Verlag, (1975), 9-11).

Das reflektierte Licht ist zirkular polarisiert, wobei die Händigkeit des reflektierten Lichtes mit dem Drehsinn der Helixstruktur der cholesterischen Phase übereinstimmt (Jacobs. S.D., J. Fusion Energy, (186), 5(1), 65). Bei Verkippen der Helixachse um den Winkel α verschiebt sich die Reflexionswellenlänge entsprechend dem Bragg-Gesetz zu λref x cos (α) (Eberle, H.J., Miller, A., Kreuzer, F.- H., Liquid Crystals, (1989), 5(3), 907).

Weitere bekannte flüssigkristalline Phasen mit helikaler Struktur sind z. B. die S_{A}* bzw. die S_{C}* Phase. In der S_{A}* Phase liegen die Moleküle innerhalb der Schichten in einer der S_{A}-Phase analogen Anordnung vor. Von Schicht zu Schicht sind die Moleküle jedoch gegeneinander verdrillt. Man erhält somit eine Verdrehung der smektischen Schichten (J.W. Goodby et al., A Hew Molecular Ordering in Helical Liquid Crystals, J. Am. Chem. Soc. (1989) 111, 8119 - 8125; T.J. Bunning et al., Bilayer structures in cholesteric, cyclic-siloxane liquid crystals, LIQUID CRYSTALS (1991), 10(4), 445-456). Bei der S_{C}*-Phase, die z.B. bei den ferroelektrischen Flüssigkristalldisplays Anwendung findet, bildet der Tiltwinkel der Moleküle eine Helixstruktur aus. Auch in dieser Phase tritt bei geeigneter Periodizität der Helix eine Selektivreflexion von Licht auf. Diese Phasen haben die gleichen optischen Eigenschaften wie die cholesterische Phase, die oben beschrieben wurden.

Eine wichtige Eigenschaft von Flüssigkristallen ist ihre Doppelbrechung. Sie wird bestimmt durch die mittlere Richtung der Moleküllängsachsen der flüssigkristallinen Substanz. Die mittlere Richtung dieser Moleküllängsachsen definiert den sogenannten Direktor (D. Demus, L. Richter, Textures of Liquid crystals, Verlag Chemie, Weinheim, New York 1978).

Will man bestimmte anisotrope Eigenschaften dieser Materialien ausnutzen, so müssen sie entsprechend orientiert werden.

Bisher wurde die lichtinduzierte Orientierung flüssigkristalliner farbstoffhaltiger Substanzen durch Bestrahlung mit polarisiertem Licht durchgeführt. Es ist beispielsweise aus DE 3920420 bekannt, flüssigkristalline Polymere durch Bestrahlen mit linear polarisiertem Licht derart zu orientieren, daß der Direktor der Moleküle nach der Bestrahlung in der Ebene liegt, die durch die Bestrahlungsrichtung und die Senkrechte zur Polarisationsebene des Bestrahlungslichtes aufgespannt wird. Die Moleküllängsachsen liegen somit nach Bestrahlen mit linear polarisiertem Licht in einer Ebene. Bei den derart orientierten flüssigkristallinen Substanzen tritt immer Doppelbrechung auf.

Polarisiertes Licht ist zudem teuer. Es wird entweder mittels polarisiert emittierender Laser gewonnen, oder das Licht von normalen Lampen muß linear polarisiert werden. Im zweiten Fall verliert man die Hälfte des Lampenlichts; außerdem ist man bei den verwendbaren Lampenleistungen durch die Polarisatoren eingeschränkt.

Es ist aus DE-A-3920421 ist bekannt, Flüssigkristalle durch zirkular polarisiertes Licht derart zu orientieren, daß die bestrahlte Substanz zirkular polarisiertes Licht reflektiert. Auch bei den so orientierten Flüssigkristallen tritt immer Doppelbrechung auf.

Es ist weiterhin bekannt, Flüssigkristalle durch Anlegen eines elektrischen Feldes so zu orientieren, daß senkrecht zur Oberfläche keine Doppelbrechung auftritt.

Die Erfindung betrifft optische Elemente auf der Basis flüssigkristalliner Substanzen, die dadurch gekennzeichnet sind, daß sie in einer definierten Einfallsrichtung keine Doppelbrechung zeigen, wobei optische Elemente bei denen senkrecht zur Oberfläche keine Doppelbrechung auftritt, ausgenommen sind.

Optische Elemente auf der Basis flüssigkristalliner Substanzen, die dadurch gekennzeichnet sind, daß sie in einer definierten Einfallsrichtung keine Doppelbrechung zeigen sind beispielsweise dadurch erhältlich, daß man eine flüssigkristalline Substanz mit unpolarisiertem Licht geeigneter Wellenlänge unter einem definierten Winkel derart bestrahlt, daß der Direktor dieser Substanz nach der Bestrahlung parallel zur Richtung des Bestrahlungslichtes beim Durchgang durch diese Substanz ausgerichtet ist.

Es zeigte sich überraschenderweise, daß derart bestrahlte flüssigkristalline Substanzen vorteilhafte Eigenschaften aufweisen. Die erfindungsgemäßen optischen Elemente zeigen in einer definierten Einfallsrichtung überraschend keine Doppelbrechung.

Keine Doppelbrechung bedeutet im Sinne der Erfindung, daß die bestrahlte, zwischen in der Polarisationsrichtung senkrecht zueinander orientierten Polarisatoren positionierte, flüssigkristalline Substanz in Bestrahlungsrichtung betrachtet bei Drehung um die durch die Bestrahlungsrichtung gegebene Achse in jeder Position schwarz erscheint.

Zur Herstellung der erfindungsgemäßen optischen Elemente, beispielsweise mittels des erfindungsgemäßen Verfahrens, eignen sich alle flüssigkristallinen Substanzen, die mindestens eine photoisomerisierbare Verbindung enthalten.

Dafür geeignet sind sowohl niedermolekulare Flüssigkristalle als auch flüssigkristalline Oligomere oder Polymere. Die mesogenen Reste können sowohl in der Hauptkette als auch in der Seitenkette vorhanden sein. Bevorzugt geeignet sind flüssigkristalline Organopolysiloxane. Lineare, cyclische oder verzweigte Organopolysiloxane sind gleichermaßen geeignet. Besonders bevorzugt geeignet sind Organopolysiloxane mit mesogenen Resten in der Seitenkette. Diese Substanzen sind beispielsweise wie in der deutschen Offenlegungsschrift DE-A-3808430 oder in der Patentschrift US-A-4410570 beschrieben herstellbar. Bevorzugt werden solche flüssigkristallinen Substanzen ausgewählt, bei denen die Glasübergangstemperatur der Substanz höher ist als die Betriebstemperatur der erfindungsgemäßen optischen Komponente.

Als photoisomerisierbare Verbindung geeignet sind beispielsweise alle aus der DE 3 920 420 bekannten photoisomerisierbaren Farbstoffe. Für die Auswahl geeigneter photoisomerisierbarer Farbstoffe gelten die in der DE 3 920 420 für die Auswahl des Farbstoffs F genannten Kriterien. So sind die geeigneten Farbstoffe vorzugsweise dadurch charakterisiert, daß sie unter Einwirkung von Licht bevorzugt einer Wellenlänge im Bereich ihrer Absorptionsbande eine Änderung der Molekülgeometrie erfahren. Die geeigneten Farbstoffe absorbieren bevorzugt im Bereich von 250 bis 2000 nm. Sie enthalten zweckmäßigerweise mindestens ein Strukturelement, welches bei Belichtung seine Geometrie ändert. Solche Strukturelemente können z. B. Mehrfachbindungen enthalten, insbesondere können sie die Möglichkeit der cis-trans-Isomerie aufweisen. Als Beispiele für Strukturelemente A, die Isomerie ermöglichen, seien genannt:
-N=N- -HC=CH- 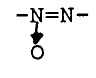
Insbesondere enthalten die Farbstoffe Gruppen, bei denen zwei aromatische Ringe oder Ringsysteme durch die genannten Strukturelemente A verbunden sind, wie z. B. 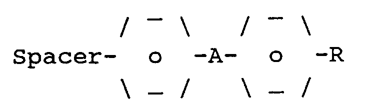
wobei R beispielsweise eine der folgenden Gruppen sein kann: 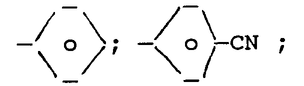
-(O)ₓ-(CH₂)_{y}-H ; -CN ;
wobei x=0, 1, bevorzugt 1 und y= 0,1, ... bis 10, bevorzugt 1 bis 5 ist.

Der Spacer dient der Anbindung an das Polymer und kann z.B. eine der folgenden Gruppen sein:
-(CH₂)ₘ-(O)ₙ- ; 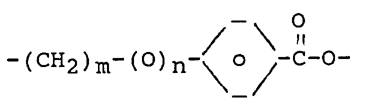 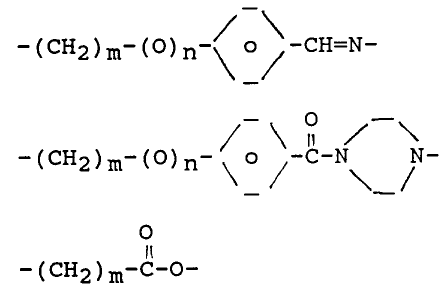
mit m=0, 1,... bis 10, bevorzugt m=3 bis 6; und n=0, 1.

Die Farbstoffe werden in einer Menge zwischen 1 und 50 Gew. % bezogen auf das Gewicht der fertigen Substanz, bevorzugt zwischen 5 und 40 Gew. %, den Flüssigkristallen zugemischt.

Falls erwünscht, werden die Farbstoffe in einer Menge zwischen 1 und 70 Gew. %, bevorzugt zwischen 5 und 50 Gew.% an die Flüssigkristalle kovalent gebunden. Dies kann beispielsweise nach dem in DE-A-38 08 430 oder auch DE-A-39 20 420 beschriebenen Verfahren durchgeführt werden. Die kovalente Bindung ist beispielsweise nötig, wenn der Farbstoff nicht mit den Flüssigkristallen mischbar ist.

Solcherart geeignete flüssigkristalline Substanzen können im amorphen Zustand, unorientiert oder orientiert im erfindungsgemäßen Verfahren zur Herstellung der optischen Elemente eingesetzt werden.

Die flüssigkristallinen Substanzen können beispielsweise durch mechanische Behandlung wie Scherung, oder beim Auftragen durch Rakeln, durch Oberflächeneffekte, elektrische bzw. magnetische Felder orientiert werden.

Die amorphen, unorientierten oder beispielsweise wie beschrieben orientierten flüssigkristallinen Substanzen werden unter einem bestimmten Winkel mit unpolarisiertem Licht einer Belichtungsenergie/Fläche von 100 J/cm²bis 50000 J/cm², bevorzugt mit 200 J/cm² bis 20000 J/cm² bestrahlt. Größere Belichtungsenergien stören nicht, solange die jeweilige Substanz nicht zu stark erwärmt wird.

Geeignet ist unpolarisiertes Licht bevorzugt einer Wellenlänge in dem Bereich, in dem die Absorption des photoisomerisierbaren Farbstoffs der flüssigkristallinen Substanz liegt. Besonders bevorzugt ist eine Wellenlänge in dem Bereich der Absorptionsbande der photoisomerisierbaren Verbindung der flüssigkristallinen Substanz. Das verwendete Licht kann monochromatisch oder polychromatisch, kohärent oder inkohärent sein.

Das Bestrahlungslicht muß unter dem Winkel auf die Probe fallen, unter dem das erfindungsgemäße optische Element keine Doppelbrechung zeigen soll.

Die erfindungsgemäßen optischen Elemente sind auch durch andere als das erfindungsgemäße Verfahren wie beispielsweise durch das Bestrahlen mit zwei zueinander senkrecht linear polarisierten Lichtquellen herstellbar, wobei die Bestrahlung unter dem Winkel erfolgen muß unter dem das erfindungsgemäße Element keine Doppelbrechung zeigen soll. Auch die Herstellung durch Anlegen geeigneter magnetischer oder elektrischer Felder ist möglich.

Die Orientierung der erfindungsgemäßen Elemente ist reversibel. Sie läßt sich beispielsweise durch Erwärmen der Probe über die Glastemperatur der eingesetzten flüssigkristallinen Substanz aufheben. Bevorzugt sollte die Probe dazu auf eine Temperatur, die mehr als 5 K über der entsprechenden Glastemperatur liegt, erwärmt werden.

In einer bevorzugten Ausführungsform des erfindungsgemäßen Verfahrens ist die flüssigkristalline Substanz zum Einsatz in dem erfindungsgemäßen Verfahren auf ein Trägersubstrat aufgebracht. Das Trägersubstrat ist in der Regel planar. Als Trägersubstrate kommen bespielsweise Kunststoff, Glas oder Quarz in Frage. Die auf das Trägersubstrat aufgebrachte flüssigkristalline Substanz kann mit einem weiteren Substrat abgedeckt sein. Trägersubstrat und weiteres Substrat müssen für das Bestrahlungslicht transparent sein.

In einer weiteren bevorzugten Ausführungsform ist es möglich, freitragende Filme einer flüssigkristallinen Substanz zum Einsatz in dem erfindungsgemäßen Verfahren zu verwenden.

Das Verfahren eignet sich bevorzugt für eine Bestrahlung senkrecht zur Probenoberfläche. Das so erhaltene Element zeigt senkrecht zur Probenoberfläche keine Doppelbrechung.

Eine wesentliche Anwendung für die erfindungsgemäßen optischen Elemente ist ihr Einsatz zur Speicherung von Informationen. Beispielsweise lassen sich durch Belichtung mittels des erfindungsgemäßen Verfahrens Daten z.B. an den belichteten Stellen speichern. Die Daten lassen sich beispielsweise anhand der an der Speicherstelle nicht vorhandenen Doppelbrechung zurückgewinnen. Diese Daten können beispielsweise Pixel für die digitale Speicherung, Bilder oder Buchstaben sein.

Das erfindungsgemäße Verfahren läßt sich auch zur Einstellung der Diffusionskonstante D in flüssigkristallinen Membranen verwenden. Da flüssigkristalline Membranen an den belichteten Stellen einen anderen Diffusionskoeffizienten haben als an unbelichteten Stellen, läßt sich die Membran mittels des erfindungsgemäßen Verfahrens diesbezüglich strukturieren.

Das Verfahren eignet sich auch zur Herstellung von optischen Elementen, die nur in einem engen Winkelbereich transparent erscheinen, unter anderen Betrachtungswinkeln jedoch opak sind (Jalousiefolien):
Wird eine opake, d.h. nicht orientierte, stark streuende Probe mit unpolarisiertem Licht in streifenförmiger Weise belichtet, so entsteht eine Lamellenstruktur aus streuenden und nicht streuenden Bereichen. Ungestreutes Licht kann in einem durch die Probendicke und die Bestrahlungsgeometrie vorgegebenen Winkelbereich durch die Probe gehen.

Folien der oben geschilderten Art können als Sichtschutz, Blendschutz oder Sonnenschutz verwendet werden.

Die folgenden Beispiele dienen zur weiteren Erläuterung der Erfindung. Der in den Beispielen verwendete Versuchsaufbau sowie die erhaltenen Ergebnisse sind in den Abbildungen dargestellt.

Es zeigen
Fig.1: Schematischer Versuchsaufbau für die Durchführung des erfindungsgemäßen Verfahrens, wie in den Beispielen beschrieben.
Fig.2: Reflexion der Probe aus Bsp.1, an einer unbestrahlten Stelle 1 und einer bestrahlten Stelle 2.
Fig. 3: Schematischer Versuchsaufbau für den Nachweis der Doppelbrechung.
Fig. 4: Doppelbrechung der Probe aus Beispiel 1, gemessen als Signal an der Photodiode bei Rotation der Probe um den Winkel ø bei festem Winkel Θ.
Fig.5: Reflexion der Probe aus Bsp.2, an einer unbestrahlten Stelle 1 und einer bestrahlten Stelle 2.
Fig.6: Doppelbrechung der Probe aus Beispiel 2, dargestellt als Signal an der Photodiode bei Rotation der Probe um den Winkel ø bei festem Winkel Θ.
Fig.7: Doppelbrechung der unbelichteten Probe aus Beispiel 3 gemessen als Signal an der Photodiode bei Rotation der Probe um den Winkel ø bei festem Winkel Θ.
Fig.8: Doppelbrechung der belichteten Probe aus Beispiel 3 dargestellt als Signal an der Photodiode bei Rotation der Probe um den Winkel ø bei festem Winkel Θ.
Fig.9: Doppelbrechung der Probe aus Beispiel 4 vor und nach Durchführung des erfindungsgemäßen Verfahrens dargestellt als Signal der Photodiode bei Rotation der Probe um den Winkel ø bei festem Winkel Θ.
Fig. 10: Schematischer Versuchsaufbau für die Bestrahlung mit Photomaske, wie in Beispiel 5 beschrieben.
Fig.11: Polarisationsmikroskopische Aufnahme der Probe aus Beispiel 5 in 0° Stellung (a) und 45° Stellung (b).
Fig.12: Doppelbrechung der Probe aus Beispiel 4 gemessen als Signal der Photodiode bei Rotation der Probe um den Winkel ø bei festem Winkel Θ.
Fig. 13: Schematische Darstellung zur Verwendung eines erfindungsgemäß hergestellten optischen Elements als Jalousiefolie wie in Beispiel 7 beschrieben.

### Beispiele

Für die Verwendung in dem erfindungsgemäßen Verfahren wurden folgende Substanzen nach Vorschrift der DE 3808430 synthetisiert:

### Substanz I:

Zu einer Lösung von 3,0 g 4-(Propen-2-oxy)-benzoesäure-4'-phenylphenylester, 4,9 g 4-(Propen-2-oxy)-benzoesäure-cholesterylester, 0,6 g 4-(4-Propen-2-oxy)-4'-ethoxy-azoben-zol und 1,1 g Tetramethylcyclotetrasiloxan in 25 ml trockenem Toluol wurden 0,16 ml einer 1 Gew.-%igen Lösung von Dicyclopentadien-Platin-dichlorid in Dichlormethan zugegeben und die so erhaltene Mischung 3 h lang unter Rückfluß erhitzt. Die Aufarbeitung erfolgt analog Substanz II. Erhalten wurden 6,2 g eines Produktes mit einer Glastemperatur von 58°C, welches bis zum Klärpunkt von 222°C eine cholesterische Phase besitzt. Das Produkt weist im orientierten Zustand ein Reflexionsmaximum bei 560 nm auf.

### Substanz II:

Zu einer Lösung von 2,0 g 4-(Propen-2-oxy)-benzoesäure-4'-phenylphenylester, 3,33 g 4-(Propen-2-oxy)-benzoesäure-dihydrocholesterylester, 0,86 g 4-(4-Propen-2-oxy)-4'-ethoxy-azobenzol und 0,91 g Tetramethylcyclotetrasiloxan in 18 ml trockenem Toluol wurden 0,07 ml einer 1 Gew.-%igen Lösung von Dicyclopentadien-Platin-dichlorid in Dichlormethan, welche nach literaturbekannten Verfahren, wie beispielsweise J. Chatt, L.M. Vallarino, L.M. Venanzi, J. Chem. Soc. (London) (1957) 2496-505 und H.C. Clark, L.E. Manzer, J. Organometal. Chem. 59 (1973) 411-28, hergestellt wird, zugegeben und die so erhaltene Mischung 4 h lang unter Rückfluß zum Sieden erhitzt.
Zur Abtrennung von platinhaltigen feinen Niederschlägen wurde über eine 5 cm lange, mit Kieselgel oder Tonsil befüllte Säule abfiltriert. Anschließend wurde das Lösungsmittel bei vermindertem Druck (26 mbar) abdestilliert, der Rückstand 2-3 mal aus Tetrahydrofuran mit Ethanol umgefällt und bei vermindertem Druck (26 mbar) bei 100°C getrocknet. Erhalten wurden 3,0 g eines Produktes mit einer Glastemperatur von 54°C, welches bis zum Klärpunkt von 193°C eine cholesterische Phase besitzt. Das Produkt weist im orientierten Zustand ein Reflexionsmaximum bei 1080 nm auf.

### Substanz III:

Zu einer Lösung von
3,0 g 4-(Propen-2-oxy)-benzoesäure-4'-cyanophenylester,
1,22 g 4-(4-Propen-2-oxy)-4'-ethoxy-azobenzol und
0,86 g Tetramethylcyclotetrasiloxan in 17 ml trockenem Toluol wurden 0,05 ml einer 1 Gew.-%igen Lösung von Dicyclopentadien-Platin-dichlorid in Dichlormethan zugegeben und die so erhaltene Mischung 4 h lang unter Rückfluß erhitzt.

Die Aufarbeitung erfolgt analog Substanz II.
Erhalten wurden 1,8 g eines Produktes mit einer Glastemperatur von 27°C, welches bis 137°C eine S_{A}-Phase besitzt und anschließend nematisch ist bis zum Klärpunkt von 165°C.

### Substanz IV:

Zu einer Lösung von 3,50 g 4-(Propen-2-oxy)-benzoesäure-4'-phenylester, 5,82 g 4-(Propen-2-oxy)-benzoesäure-dihydrocholesterylester, 2,57 g 4-(4-Propen-2-oxy)-4'-ethoxy-azobenzol und 1,82 g Tetramethylcyclotetrasiloxan in 30 ml trockenem Toluol wurden 0,13 ml einer 1 Gew.-%igen Lösung von Dicyclopentadien-Platindichlorid in Dichlormethan zugegeben und die so erhaltene Mischung 4 h unter Rückfluß erhitzt. Die Aufarbeitung erfolgt analog Substanz II.
Erhalten wurden 10,0 g eines Produktes mit einer Glastemperatur von 53°C, welches bis zum Klärpunkt von 189°C eine cholesterische Phase besitzt. Das Produkt weist im orientierten Zustand ein Reflexionsmaximum bei 1310 nm auf.

### Beispiel 1

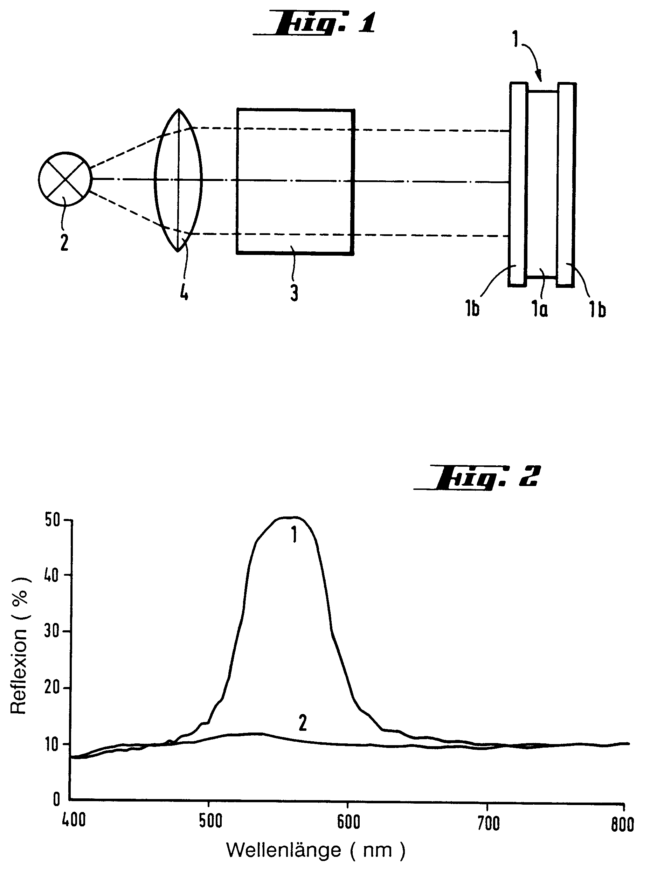

Substanz I (1a in Fig.1) wurde durch Erhitzen auf 140°C und Scheren zwischen zwei mit Polyimid als Orientierungshilfe beschichteten Glasplatten (1b in Fig.1) mit der Helixachse senkrecht zum Substrat (Glas) orientiert. Die Orientierung der Substanz ist am Auftreten der für diese Phase typischen Reflexionsbande bei 555 nm zu erkennen (Meßkurve 1 in Fig. 2).
Danach wurde, wie in Fig. 1 schematisch dargestellt, die Probe 1 mit dem gebündeltem, unpolarisiertem Licht einer 200 W Quecksilberhochdrucklampe 2 bestrahlt. Als Wärmestrahlungsfilter diente eine 4 cm lange Wasserküvette 3. Das Licht wurde mit Hilfe eines Quarzkondensors 4 auf die Probe fokussiert. Das gebündelte Licht fällt senkrecht auf die Probenoberfläche. Der Spektralbereich des Lichtes wurde durch das Wasserbad und die verwendeten Optikmaterialien auf 320 bis 920 nm eingeschränkt. Das Licht hatte an der Probenoberfläche eine Leistung von 400 mW/cm². Die Probe wurde 14 h bestrahlt.

Die so bestrahlte Probe erschien bei senkrechter Betrachtung klar und farblos: Die Moleküle waren homöotrop orientiert. Die Reflexionsbande der cholesterischen Phase war nicht mehr vorhanden (Meßkurve 2 in Fig. 2). Die Banden wurden durch Reflexionsmessungen mit einem UV-VIS-NIR Spektralphotometer Lambda19 (Perkin-Elmer) mit Reflexionszusatz nachgewiesen.

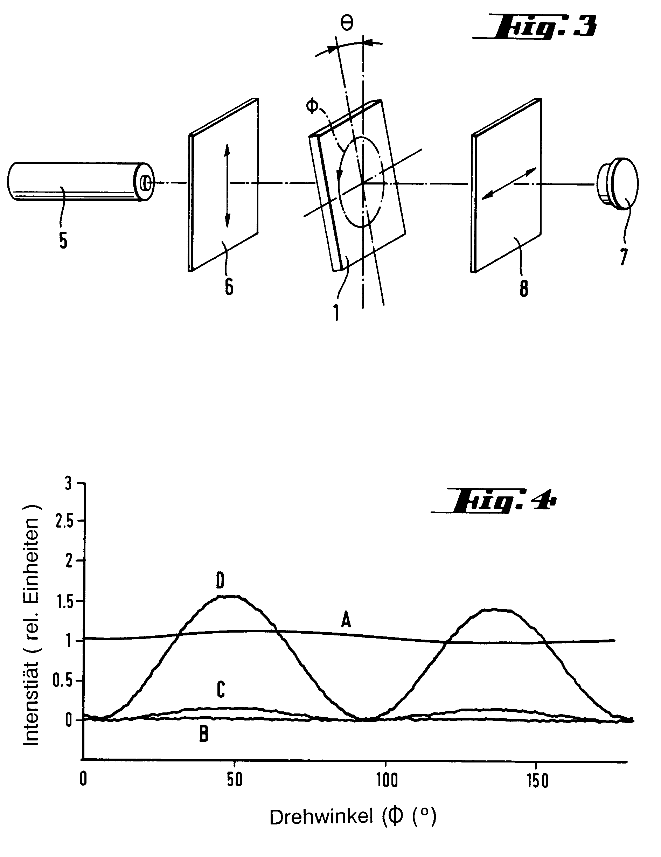

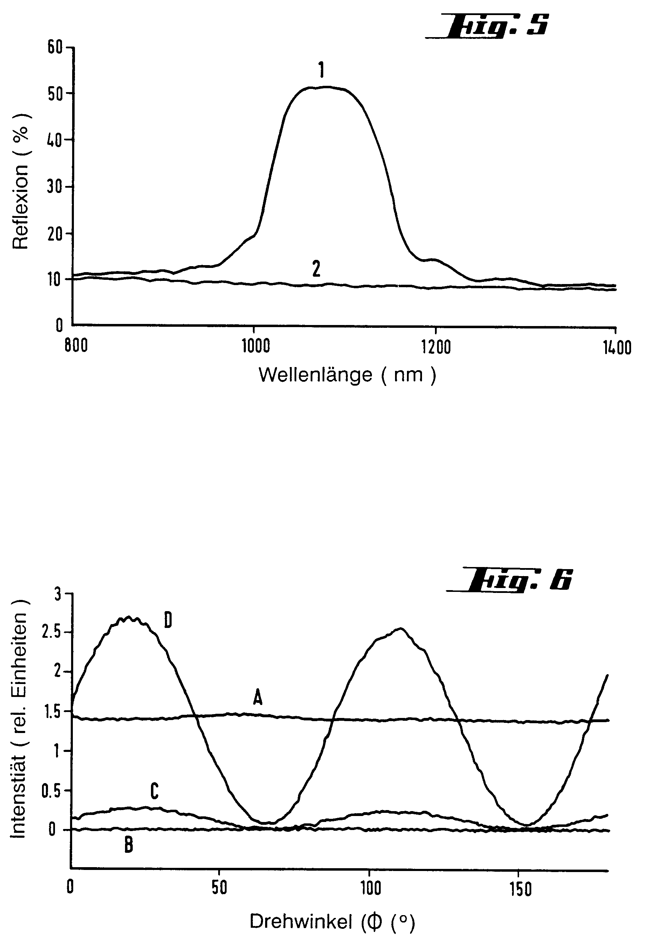

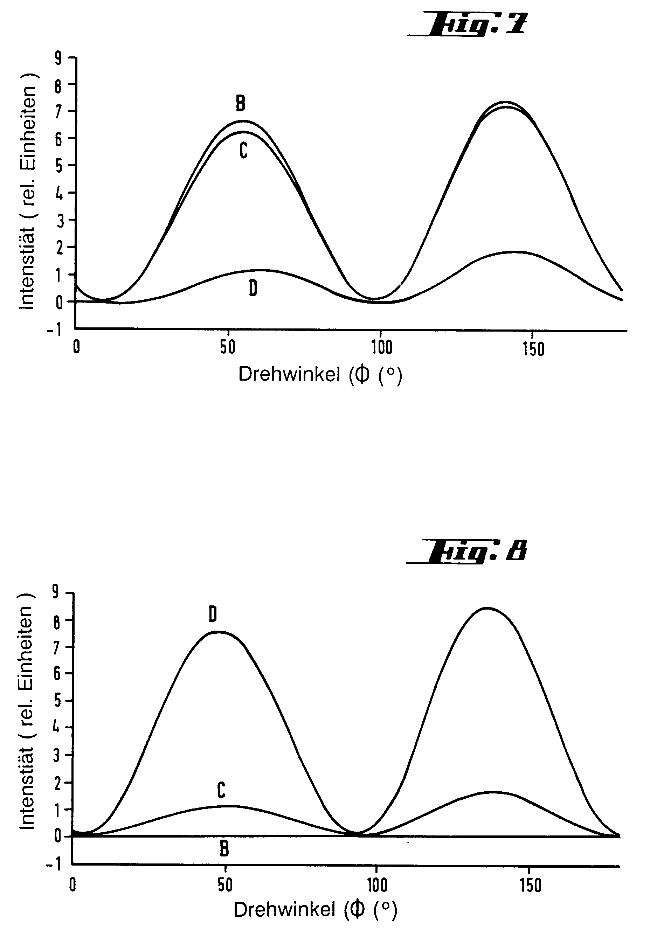

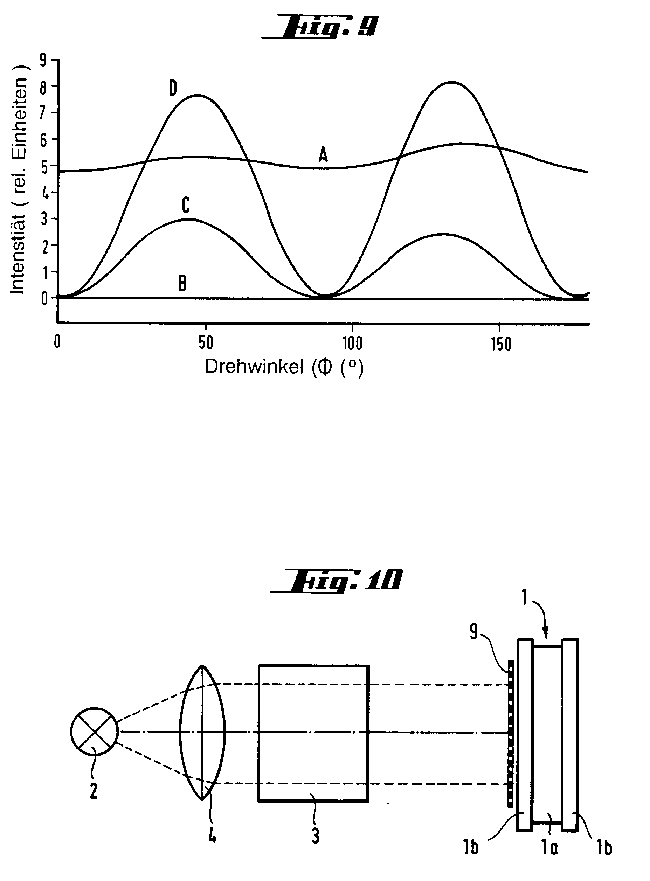

Zum Nachweis der Doppelbrechung wurde wie folgt verfahren (Schematischer Versuchsaufbau Fig. 3):
Die Probe 1 wurde mit dem polarisierten Licht eines HeNeLasers 5 durchstrahlt. Das Licht des HeNe-Lasers wurde mittels eines Polarisators 6 polarisiert. Vor dem Detektor 7 steht ein Polarisator 8, dessen Polarisationsrichtung unter einem Winkel von 90° zur Polarisationsrichtung des Laserlichts orientiert ist. Die erfindungsgemäße Probe wird bei einem festen Kippwinkel Θ um den Meßstrahl gedreht (Drehwinkel ø). Der Kippwinkel Θ ist 0°, wenn der Meßstrahl senkrecht auf die Probenoberfläche trifft. Als Detektor 7 diente eine Photodiode. Das Signal an der Photodiode bei Rotation der Probe um den Drehwinkel ø bei jeweils festem Kippwinkel Θ ist in Fig. 4 dargestellt.

Mit der unbelichteten Probe erhält man bei senkrechtem Lichteinfall bei allen Drehwinkeln ø ein Signal (Kurve A in Fig. 4). Dies ist aufgrund der helikalen Struktur der flüssigkritallinen Substanz zu erwarten. An der belichteten Stelle erhält man bei senkrechtem Lichteinfall bei keinem Drehwinkel ø ein Signal an der Diode (Kurve B in Fig. 4). Die Probe ist in dieser Richtung nicht mehr doppelbrechend.

Verkippt man die erfindungsgemäß behandelte Probe aus der senkrechten, so erhält man bei bestimmten Drehwinkeln ø kein Signal und bei anderen Winkeln ø ein hohes Signal. Dies belegt ebenfalls die homöotrope Orientierung der Moleküle. Wären die Moleküle nach der Durchführung des erfindungsgemäßen Verfahrens vollkommen isotrop angeordnet, so würde sich auch durch Verkippen der Probe keine Aufhellung ergeben. Kurve C in Fig. 4 zeigt die Meßergebnisse für den Kippwinkel Θ = 20°. Kurve D in Fig. 4 zeigt die Meßergebnisse für den Kippwinkel Θ = 40°.

### Beispiel 2

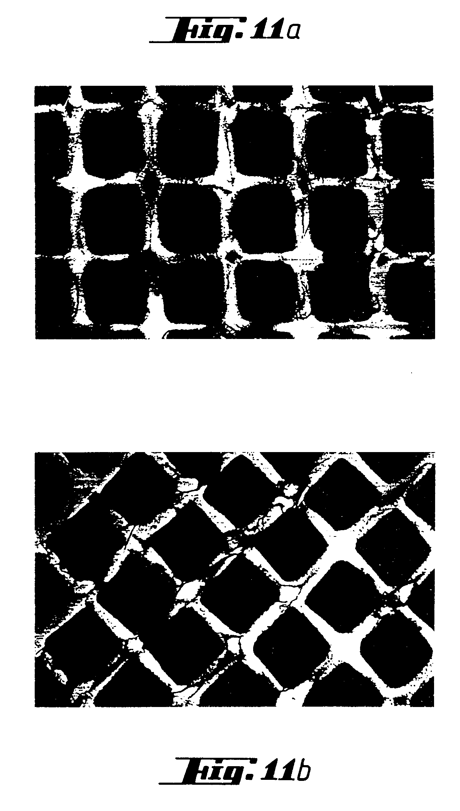

Substanz II wurde durch Erhitzen auf 140°C und Scheren zwischen 2 mit Polyimid als Orientierungshilfe beschichteten Glasplatten mit der Helixachse senkrecht zum Substrat (Glas) orientiert. Die Orientierung der Substanz ist am Auftreten der für diese Phase typischen Reflexionsbande bei 1080 nm zu erkennen (siehe Kurve 1 in Fig. 5). Danach wurde die Probe analog Bsp. 1 mit unpolarisiertem Licht bestrahlt (wie in Fig.1 dargestellt: 200 W Quecksilberhochdrucklampe, 4 cm Wasserküvette als Wärmestrahlungsfilter, Quarz-Kondensor, Glasplattenstapel und Folienpolarisator zur Polarisation des Lichtes, Spektralbereich des Lichtes an der Probe 320 nm - 920 nm, Leistung 200 mW/cm² an der Probenoberfläche). Die Bestrahlungszeit betrug 7 Stunden.

Die so bestrahlte Probe war homöotrop orientiert. Sie erschien klar und farblos. Die Reflexionsbande der cholesterischen Phase bei λ = 1080 nm war nicht mehr vorhanden (Meßkurve 2 in Fig.5).

Die Messung der Doppelbrechung wurde, wie in Beispiel 1 beschrieben, durchgeführt. Die homöotrope Orientierung wurde durch die Messungen in Fig. 6 nachgewiesen. Mit der unbelichteten Probe erhält man bei senkrechtem Lichteinfall (Θ =0°) bei allen Winkeln ø ein Signal (Kurve A in Fig. 6).

An einer belichteten Stelle erhält man bei senkrechtem Lichteinfall (Θ =0°) bei keinem Drehwinkel ø ein Signal an der Diode (Kurve B in Fig. 4). Die Probe ist in dieser Richtung nicht mehr doppelbrechend.

Verkippt man die Probe aus der Senkrechten, so erhält man bei bestimmten Winkeln ø kein Signal und bei anderen Winkeln ø ein hohes Signal. Dies belegt ebenfalls die homöotrope Orientierung der Moleküle in der erfindungsgemäß hergestellten optischen Komponente. Wären die Moleküle nach der Bestrahlung vollkommen isotrop angeordnet, so würde sich auch durch Verkippen der Probe keine Aufhellung ergeben. Kurve C in Fig. 6 zeigt die Meßergebnisse für den Kippwinkel Θ = 20°. Kurve D in Fig. 6 zeigt die Meßergebnisse für den Kippwinkel Θ = 40°.

### Beispiel 3

Substanz III wurde durch Erhitzen auf 150°C und Scheren zwischen zwei mit Polyimid als Orientierungshilfe beschichteten Glasplatten und langsames Abkühlen planar orientiert.
Der Nachweis der planaren, parallelen Orientierung erfolgte durch eine Doppelbrechungsmessung. Die Doppelbrechung der Substanz ist in Fig. 7 dargestellt. Kurve B zeigt das Signal an der Photodiode bei Rotation der unbelichteten Probe mit dem Kippwinkel Θ = 0°. Kurve C zeigt das Signal an der Photodiode bei Rotation der unbelichteten Probe mit dem Kippwinkel Θ = 20°. Kurve D zeigt das Signal an der Photodiode bei Rotation der unbelichteten Probe mit dem Kippwinkel Θ = 40°.

Die Probe wurde wie in Bsp. 1 beschrieben, mit unpolarisiertem Licht bestrahlt (siehe Fig. 1; 200 W Quecksilberhochdrucklampe, 4 cm Wasserküvette als Wärmestrahlungsfilter, Quarz-Kondensor, Spektralbereich des Lichtes an der Probe 320 nm -920 nm, Leistung 100 mW/cm² an der Probenoberfläche). Die Bestrahlungszeit betrug 15 Stunden.

Die durch Bestrahlung hergestellte erfindungsgemäße optische Komponente erschien klar und farblos. Sie war homöotrop orientiert. Die Messung der Doppelbrechung wurde, wie in Beispiel 1 beschrieben, durchgeführt. Die Doppelbrechung ist bei Bestrahlung senkrecht zur Oberfläche (Kippwinkel Θ = 0°) verschwunden (Kurve B in Fig. 8). Kurve C in Fig. 8 zeigt das Signal an der Photodiode bei Rotation der erfindungsgemäß hergestellten Probe mit dem Kippwinkel Θ = 20°. Kurve D in Fig. 8 zeigt das Signal an der Photodiode bei Rotation der erfindungsgemäß hergestellten Probe mit dem Kippwinkel Θ = 40°.

### Beispiel 4

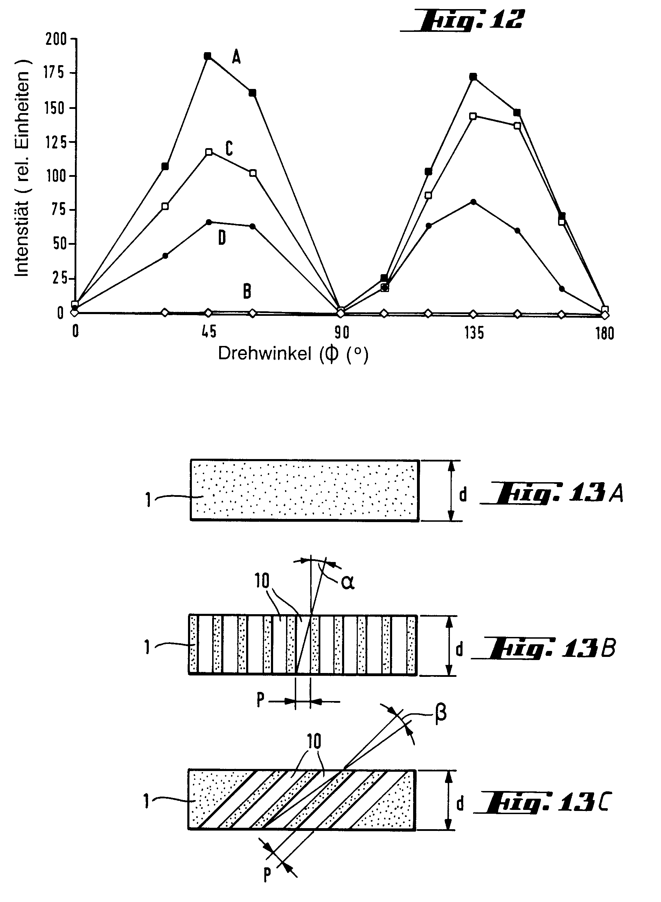

Substanz I wurde unorientiert präpariert: durch Aufheizen der in Beispiel 1 orientierten Probe knapp über die Glastemperatur (70°C), Scheren und anschließendes Abschrecken erhält man eine trübe, streuende Probe. Die Probe reflektiert kein Licht und die Doppelbrechung bei senkrechtem Lichteinfall ist für alle Drehhwinkel Θ ungefähr gleich (Kurve A in Fig. 9).

Nach Bestrahlen mit dem unpolarisierten Licht einer 200 W Quecksilberhochdrucklampe analog Beispiel 1 (Leistung 0.3 W/ cm², 20 Stunden) erhielt man eine homöotrope Orientierung. Die Probe erschien klar und farblos; die Lichtstreuung war stark reduziert. (Ein Teil der Probe erschien schon nach 5 Stunden Belichtung klar). Die Lichtstreuwerte, die in Anlehnung an DIN 5036 mit Licht der Wellenlänge 633 nm bestimmt wurde (Meßfleck 1.5 mm Durchmesser), sind in Tab. 1 zusammengefaßt. Die Doppelbrechung, die wie in Beispiel 1 gemessen wurde, war bei einem Kippwinkel Θ gleich 0° verschwunden (Kurve B in Fig. 9) bzw. für einen Kippwinkel von 20° bzw 40°jeweils abhängig vom Drehwinkel stark schwankend (Kurven C bzw D in Fig. 9).

**Tab.1**

| Probe | Streuung (%) | Transmission (%) |
|---|---|---|
| orientierte Probe (Bsp.1), unbelichtet | 0,4±0,2 | 87±3 |
| orientierte Probe (Bsp.1), belichtet | 0,4±0,2 | 89±3 |
| desorientierte Probe (Bsp.4), unbelichtet | 19±1 | 65±3 |
| desorientierte Probe (Bsp.4), belichtet | 1.3±0.3 | 92±3 |

### Beispiel 5

Substanz IV wurde mit der Helixachse senkrecht zum Substrat orientiert. Durch Bestrahlen der Probe 1 mit dem unpolarisierten Licht einer Quecksilberhochdrucklampe 2 analog Beispiel 1 (Leistung 0.3 W/cm², 14 Stunden) durch eine Photomaske 9 (Drahtgitter, Maschenweite 1mm, Drahtstärke 0,2 mm) hindurch wurde ein Muster in die Probe eingeschrieben (schematischer Versuchsaufbau Fig. 10). Betrachtet man die Probe im Polarisationsmikroskop zwischen gekreuzten Polarisatoren, so erscheinen die belichteten Stellen dunkel und die unbelichteten Stellen erscheinen hell (Fig. 11 a). Verdreht man die Probe um 45° so bleiben die belichteten Stellen dunkel (Fig. 11 b). Die belichteten Stellen sind somit homöotrop orientiert.

### Beispiel 6

Substanz I wurde analog Bsp. 1 mit der Helixachse senkrecht zum Substrat (Glas) orientiert. Die Probe wurde mit dem unpolarisierten Licht einer 200 W Quecksilberhochdrucklampe (Leistung 0.3 W/cm², 7 Stunden) bestrahlt, wobei die Einstrahlungsrichtung so gewählt wurde, daß das Bestrahlungslicht unter einem Winkel von 40° auf die Probenoberfläche fiel. Man erhält eine Orientierung derart, daß der Direktor parallel zur Richtung des Bestrahlungslichtes in der Probe ausgerichtet ist. Die erfindungsgemäße Probe erscheint in dieser Richtung klar und farblos. Die Reflexionsbande der cholesterischen Phase ist nicht mehr vorhanden. Mißt man die Transmission zwischen gekreuzten Polarisatoren unter diesem Kippwinkel Θ, so ist die Transmission für alle Drehwinkel ø gleich Null, d.h. die Doppelbrechung in dieser Vorzugsrichtung zwischen gekreuzten Polarisatoren ist verschwunden (Fig. 12, Kurve B). Mißt man die Transmission bei anderen Kippwinkeln ungleich dem Winkel, unter dem die Probe bestrahlt wurde, so ergibt sich beim Verdrehen der Probe um die Lichtrichtung (Winkel Θ) wieder Aufhellung (Kurven A, C, D). Der Einfallswinkel, bei dem die Doppelbrechung verschwindet, ist dabei ca. 40°.

### Beispiel 7

Präpariert man Substanz I wie in Beispiel 4 beschrieben, so erhält man eine streuende Probe (Fig. 13, A). Belichtet man diese Probe durch eine Photomaske, die ein streifenförmiges Muster aufweist, hindurch mit unpolarisiertem Licht, so erhält man an den belichteten Stellen (10 in Fig. 13) eine definierte Orientierung der Substanz (in Fig. 13 B bei senkrechter Bestrahlung; in Fig. 13 C bei schräger Bestrahlung). An den belichteten Stellen streut die Probe nicht mehr. An den unbelichteten Stellen 2 streut die Probe weiterhin (Nachweis siehe Bsp. 4). Ungestreutes Licht kann im Winkelbereich α bzw. β durch die Probe hindurchtreten (Fig. 13, B,C). Für den Fall der senkrechten Bestrahlung gilt dabei tan α = p/d. Für schräge Belichtung ergibt sich der Winkel β aus dem Bestrahlungswinkel, der Probendicke d und der Lamellendicke p.

## Patentansprüche

1. Optische Elemente auf der Basis flüssigkristalliner Substanzen, dadurch gekennzeichnet, daß sie in einer definierten Einfallsrichtung keine Doppelbrechung zeigen, wobei optische Elemente, bei denen senkrecht zur Oberfläche keine Doppelbrechung auftritt ausgenommen sind.

2. Verfahren zur Herstellung optischer Elemente auf der Basis flüssigkristalliner Substanzen, dadurch gekennzeichnet, daß eine flüssigkristalline Substanz mit unpolarisiertem Licht geeigneter Wellenlänge unter einem definiertem Winkel derart bestrahlt wird, daß der Direktor dieser Substanz nach der Bestrahlung parallel zur Richtung des Bestrahlungslichtes beim Durchgang durch diese Substanz ausgerichtet ist.

3. Verfahren nach Anspruch 2, dadurch gekennzeichnet, daß die flüssigkristalline Substanz mindestens eine photoisomerisierbare Verbindung enthält.

4. Verfahren nach Anspruch 3, dadurch gekennzeichnet, daß unpolarisiertes Licht einer Wellenlänge in dem Bereich, in dem die Absorption des photoisomerisierbaren Farbstoffs der flüssigkristallinen Substanz liegt eingesetzt wird.

5. Verfahren nach einem oder mehreren der Ansprüche 2 bis 4, dadurch gekennzeichnet, daß die Bestrahlung unter einem Winkel von 90° zur Oberfläche der flüssigkristallinen Substanz durchgeführt wird.

6. Verwendung der optischen Elemente nach Anspruch 1 oder hergestellt nach einem Verfahren gemäß einem oder mehreren der Ansprüche 2 bis 6 zur Speicherung von Information.

7. Verwendung des Verfahrens nach einem oder mehreren der Anspüche 2 bis 5 zur Herstellung linsenähnlicher optischer Elemente.

8. Verwendung des Verfahrens nach einem oder mehreren der Anspüche 2 bis 5 zur Herstellung von Membranen mit lokal variierender Diffusionskonstante.

9. Verwendung des Verfahrens nach einem oder mehreren der Ansprüche 2 bis 5 zur Herstellung optischer Elemente, die nur in einem engen Winkelbereich transparent erscheinen, unter anderen Betrachtungswinkeln jedoch opak sind.
